# EUROPÄISCHE PATENTSCHRIFT

(11) **EP 0 811 729 B1**
(45) Veröffentlichungstag und Bekanntmachung des Hinweises auf die Patenterteilung: **23.10.2002**
(21) Anmeldenummer: 97810338.0
(22) Anmeldetag: 03.06.1997
(51) Int. Cl.: E03D 3/06, F16K 27/00

(54) **Ventilanordnung für eine Spülvorrichtung**
Valve arrangement for a flush device
Agencement de vanne pour dispositif de chasse

(30) Priorität: 12.12.1996 CH 305596; 03.06.1996 CH 140096
(43) Veröffentlichungstag der Anmeldung: 10.12.1997
(73) Patentinhaber: GEBERIT TECHNIK AG, 8645 Jona (CH)
(72) Erfinder: Benne, David, 8645 Jona (CH); Pfister, Guido, 8852 Altendorf (CH); Segieth, Matthias, 8640 Rapperswil (CH); Heierli, Marcel, 9631 Ulisbach (CH); Lobeto, Christian, 8312 Winterberg (CH)
(74) Vertreter: Groner, Manfred

(56) Entgegenhaltungen:
- EP-A- 0 210 933
- FR-A- 2 308 040
- US-A- 4 390 157
- US-A- 4 574 967
- US-A- 4 611 356
- US-A- 5 388 610

## Beschreibung

Die Erfindung betrifft eine Ventilanordnung nach dem Oberbegriff des Anspruchs 1.

Eine Ventilanordnung dieser Gattung ist im Stand der Technik durch die DE-U-296 03 869 bekannt geworden. Bei dieser sind die beiden Öffnungen jeweils mit einem Deckel verschlossen, der mittels Schrauben am gemeinsamen Ventilkörper befestigt ist. Diese Ventilanordnung soll einen funktionsgerechten und kompakten Aufbau aufweisen und eine einfache Handhabung bei der Montage und Installation gewährleisten. Überprüfungen oder Servicemassnahmen sollen in einfacher Weise durchführbar sein.

Die Erfinder haben sich nun die Aufgabe gestellt, die gattungsgemässe Ventilanordnung noch weiter zu verbessern, so dass Montage und Installation noch schneller und einfacher und trotzdem zuverlässig durchführbar sind.

Die Aufgabe ist bei einer gattungsgemässen Ventilanordnung gemäss Anspruch 1 gelöst. Bei der erfindungsgemässen Ventilanordnung ist der Gehäuseteil für das Schliessventil gleichzeitig auch Träger für Betätigungsmittel dieses Schliessventils. Diese Mittel umfassen insbesondere ein pneumatisches oder elektromagnetisches Pilotventil. Der Gehäuseteil und die Betätigungsmittel bilden dann eine Einheit, die bei der Montage am Ventilkörper aufgrund der Renkverbindung sehr einfach und schnell befestigt werden kann. Auch bei einer Revision kann dieser Gehäuseteil zusammen mit dem Betätigungsmittel vom Ventilkörper abgenommen werden. Werkzeuge sind hierbei nicht erforderlich und Einzelteile können nicht vergessen werden oder verlorengehen. Der Gehäuseteil ist auch Träger für die Ventilmembran. Der Gehäuseteil, die Betätigungsmittel und die Ventilmembran bilden einen vollständigen Schliesseinsatz.

Der Gehäuseteil ist vorzugsweise so ausgebildet, dass er wahlweise eine pneumatische oder elektromagnetische Betätigungsvorrichtung aufnehmen kann. Für beide Betätigungsarten kann dann der gleiche Gehäuseteil verwendet werden. Für die Montage werden dann der Gehäuseteil, die Ventilmembran und die Betätigunsvorrichtung miteinander verbunden und als Einheit in die entsprechende Öffnung des Ventilkörpers eingesetzt und mit einer Drehbewegung fixiert. Auch bei einer Wartung, Reinigung oder bei Auswechselarbeiten kann dann diese Einheit als ganzes vom Ventilkörper abgenommen werden. Die vorgesehene Renkverbindung ermöglicht ein leichtes Fügen und ebenso leichtes Lösen der Gehäuseteile. Das Montieren der Gehäuseteile wird durch axiales Zusammenstecken und anschliessendes radiales Verdrehen der Gehäuseteile erreicht.

Nach einer Weiterbildung der Erfindung weisen Befestigungsnocken wenigstens eines Gehäuseteils Rastnasen auf, die mit Rastmitteln des Ventilkörpers zur Drehsicherung des Gehäuseteils zusammenarbeiten. Damit wird ein selbständiges Lockern des Gehäuseteils während des Betriebs ohne die Notwendigkeit zusätzlicher Teile sicher vermieden. Ist nach einer Weiterbildung der Erfindung auch in die Öffnung des Absperr- und Regulierungsventils ein Gehäuseteil als Träger für ein Sieb eingesetzt und mittels einer Renkverbindung lösbar befestigt, so wird die Montage noch weiter vereinfacht.

Weitere vorteilhafte Merkmale ergeben sich aus den abhängigen Patentansprüchen, der nachfolgenden Beschreibung sowie der Zeichnung.

Ein Ausführungsbeispiel der erfindungsgemässen Ventilanordnung wird nachfolgend anhand der Zeichnung näher erläutert. Es zeigen:
Figur 1 eine teilweise geschnittene Ansicht einer erfindungsgemässen Ventilanordnung,
Figur 2 eine weitere, ebenfalls teilweise geschnittene Ansicht der Ventilanordnung gemäss Figur 1, wobei aus zeichnerischen Gründen Teile weggelassen sind,
Figur 3 schematisch einzelne Schritte bei der Montage des Schliessventils, und
Figuren 4 und 5 Schnitte durch einen Teil eines fertig montiertes Schliessventil.

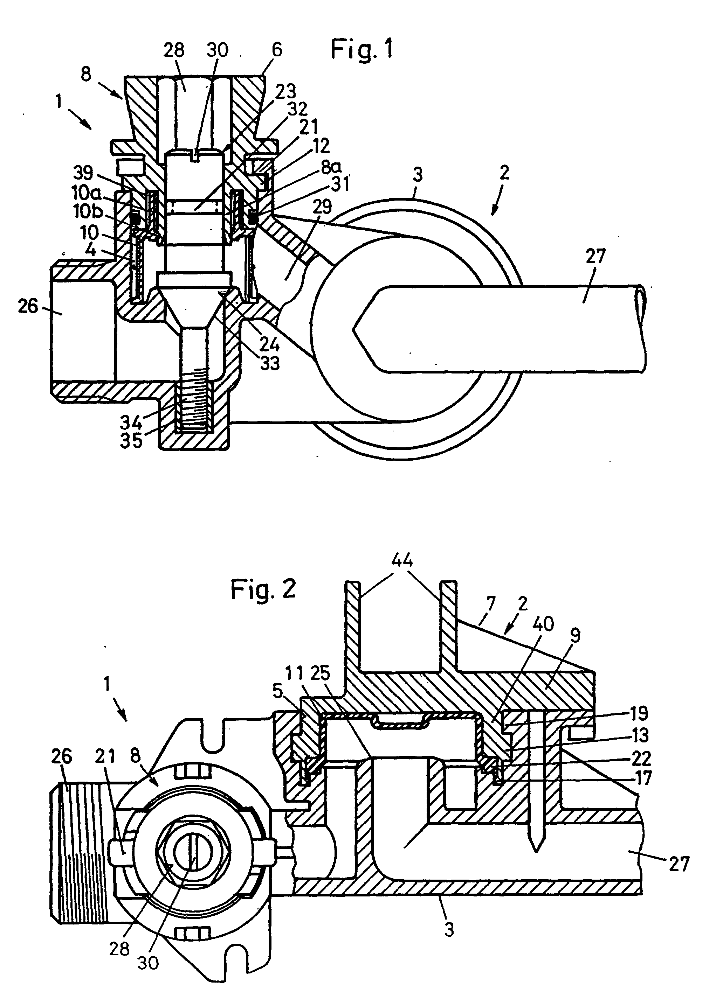

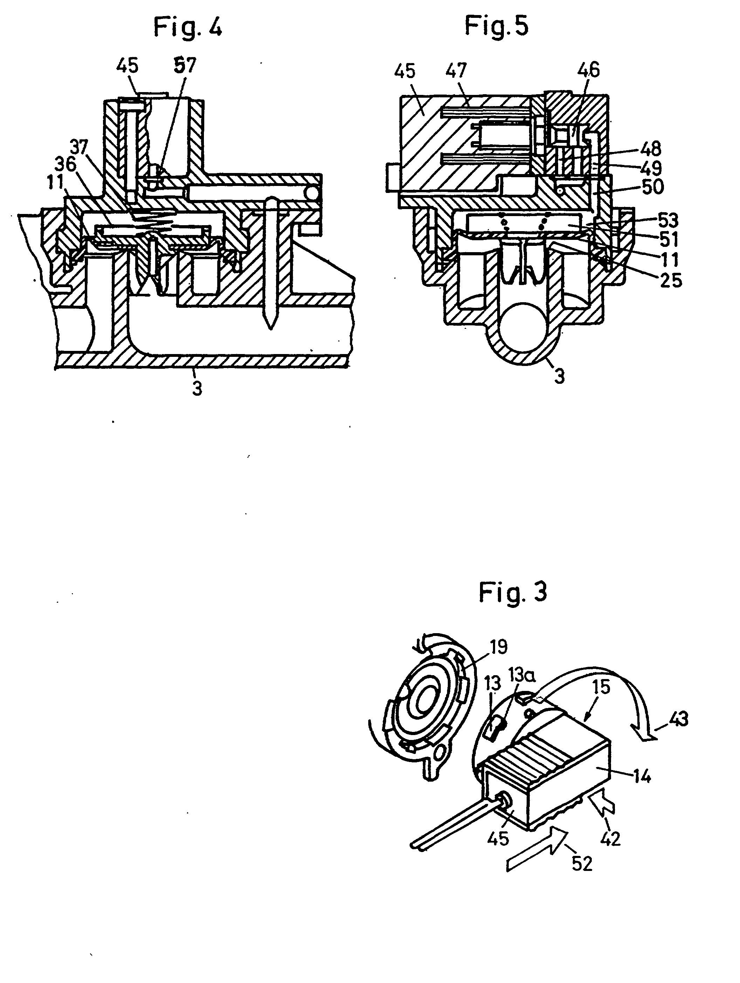

Die in den Figuren 1 und 2 gezeigte Ventilanordnung weist einen Ventilkörper 3 mit einem Eingangsstutzen 26 und einem Ausgangsstutzen 27 auf, an denen das Gehäuse 3 an eine hier nicht gezeigte Wasserleitung insbesondere einer Hausinstallation angeschlossen wird. Nahe beim Eingangsstutzen 26 befindet sich ein Absperr- und Regulierventil 1 mit einem konischen Ventilsitz 24, der mit einer Regulierschraube 23 zusammenarbeitet. In Durchströmrichtung nach dem Ventil 1 ist ein Schliessventil 2 angeordnet, das über einen Durchgang29mitdemAbsperr- undRegulierventil 1 verbunden ist. Bezüglich der Ausbildung des Schliessventils 2 wird zur Offenbarung auf die frühere schweizerische Prioritätsanmeldung 1400/96 des Anmelders verwiesen. Das Schliessventil 2 weist gemäss Figur 2 einen Ventilsitz 25 auf, der mit einer Ventilmembran 11 zusammenarbeitet. Die Mittel zur Betätigung der Membran 11 sind in den Figuren 1 und 2 nicht eingezeichnet. Diese Betätigung kann über ein pneumatisches oder elektromagnetisches Pilotventil 45 erfolgen. Die Figuren 4 und 5 zeigen beispielsweise solche Betätigungsmittel. Der Gehäuseteil 8 bildet mit einem Sieb 10 und einer Regulierschraube 23 eine Schliessvorrichtung 6 für das Absperr- und Regulierventil 1. Der Gehäuseteil 9 bildet zusammen mit einem in den Figuren 4 und 5 gezeigten Pilotventil 45 und einer Ventilmembran 11 eine Schliessvorrichtung 7 für das Schliessventil 2 und diese Teile bilden zusammen eine Einheit.

In der Figur 1 liegt die Regulierschraube 23 mit einer konischen Dichtfläche 33 am Ventilsitz 24 an. Das Ventil 1 ist somit geschlossen. Um das Ventil 1 zu öffnen, wird mit einem hier nicht gezeigten Schraubendreher die Regulierschraube 23 am dafür vorgesehenen Schlitz 30 aus einer Gewindehülse 35 nach oben herausgeschraubt. Die konische Dichtfläche 33 hebt damit vom Ventilsitz 24 ab und lässt einen Durchgang offen. Die Regulierschraube 23 ist an einem oberen Ende mit einem Dichtring 32 in einer mittigen zylindrischen Bohrung 38 gegen den Gehäuseteil 8 abgedichtet. Der Gehäuseteil 8 ist seinerseits mit einem Dichtungsring 31 in einer Öffnung 4 des Ventilkörpers 3 gegen den Ventilkörper 3 verdrehbar abgedichtet. Der Gehäuseteil 8 dient als Träger des Siebes 10, das hülsenförmig ausgebildet ist und mit einem oberen ringförmigen Ansatz 10a in einen ringförmigen Kanal 39 des Gehäuseteils 8 lösbar eingerastet ist. Dazu sind am Sieb 10 Rastnocken 10b angeformt, die eine Rastmittel 8a aufweisende Wand des Gehäuseteils 8 hintergreifen. Das Sieb 10 kann durch eine axiale Bewegung auf den Gehäuseteil 8 aufgerastet werden. Es ist so angeordnet, dass es vom Wasser beim Einlauf in den Durchgang 29 durchströmt werden muss.

Die Befestigung des Gehäuseteils 8 am Ventilkörper 3 erfolgt mit einer Renkverbindung, die mehrere radial nach aussen gerichtete Nocken 12 aufweist, die nach innen gerichtete Vorsprünge 21 des Ventilkörpers 3 untergreifen. Zum Drehen des Gehäusteils 8 weist dieses eine mehrkantige Öffnung 28 auf, in welche ein hier nicht gezeigter Inbusschlüssel einsetzbar ist. Zum Reinigen des Siebes 10 wird der Gehäuseteil 8 gedreht und aus der Öffnung 4 zusammen mit dem Sieb 10 herausgehoben. Die Montage des gereinigten Siebes 10 erfolgt dann gemäss Figur 3, wonach das Sieb 10 und der Gehäuseteil 8 zusammengesteckt und gemeinsam in die Öffnung 4 eingesetzt und mit einer Drehbewegung von 90° fixiert werden. Durch Drehen der Regulierschraube 23 kann dann die Absperrung aufgehoben und entsprechend dem Wasserdruck in der Zufuhrleitung der Durchgang reguliert werden.

Das Schliessventil 2 weist einen Gehäuseteil 9 auf, der in eine Öffnung 5 des Ventilkörpers 3 eingesetzt und ebenfalls durch eine Renkverbindung lösbar mit dem Ventilkörper 3 verbunden ist. Wie insbesondere Figur 2 zeigt, besitzt der Gehäuseteil 9 einen ringförmigen Ansatz 40, an dem radial nach aussen gerichtete Befestigungsnocken 13 angeformt sind, die nach innen gerichtete als Rastmittel ausgebildete, Vorsprünge 19 untergreifen. Die Figur 4 zeigt ebenfalls die Befestigungsnocken 13 sowie die Vorsprünge 19 sowie schematisch die Montage. An den Befestigungsnocken 13 sind Rastnasen 13a angeformt, die an den Vorsprüngen 19 verrastbar sind. Die Rastnasen 13a bilden eine Sicherung gegen ein selbständiges Lockern des Gehäuseteils 9 während des Betriebs. In den ringförmigen Ansatz 40 ist eine Feder 37 und eine gummielastische Ventilmembran 11 eingesetzt, die einen verdickten Rand 22 aufweist, der zwischen dem Gehäuseteil 9 und einer Schulter 41 des Ventilgehäuses 3 festgeklemmt ist. Beim Montieren wird die Ventilmembran 11 am Gehäuseteil 9 durch Rastnocken 17 fixiert. Die Renkverbindung ist so ausgebildet, dass der Rand 22 über seinen ganzen Umfang zusammengedrückt wird. Für die Montage wird der Gehäuseteil 9 zusammen mit der in Figur 1 und 2 nicht gezeigten Betätigungsvorrichtung gemäss Figur 4 in Richtung des Pfeils 42 axial in die Öffnung 5 eingesetzt und in Richtung des Pfeils 43 gedreht.

Der Gehäuseteil 9 weist aussenseitig zwei im Abstand zueinander angeordnete Wandungen 44 auf, die zur Aufnahme des Pilotventils 45 dienen, das gemäss Figur 4 in Richtung des Pfeils 52 auf den Gehäuseteil 9 aufgeschoben wird. Das Pilotventil 45 weist gemäss den Figuren 4 und 5 einen Schieber 46 auf, der mittels einer Magnetspule 47 zwischen zwei Steuerdüsen 48 und 49 verschiebbar ist. Über einen Durchgang 50 kann dadurch eine Kammer 52 nach aussen verbunden werden, so dass die Ventilmembran 11, die mit einem Stützteller 51 versehen ist, vom Ventilsitz 25 abhebt. Das Prinzip einer solchen Betätigung ist bekannt und braucht hier deshalb nicht näher erläutert zu werden. Es wird bezüglich einer pneumatischen Betätigung hier auch auf die bereits oben genannten schweizerische Patentanmeldung verwiesen. Die Ventilmembran 11 und auch das Pilotventil 45 sind wie ersichtlich lösbar am Gehäuseteil 9 angebracht und können für eine pneumatische Betätigung ausgetauscht werden, wobei Dichtungsmittel 57 Durchgänge nach aussen abdichten. Der Gehäuseteil 9 bleibt dabei der gleiche und auch die Montageschritte ändern sich im wesentlichen nicht.

## Patentansprüche

1. Ventilanordnung für eine Spülvorrichtung, insbesondere ein Urinal, mit einem Absperr- und Regulierventil (1) und einem diesem nachgeschalteten pneumatisch oder elektromagnetisch betätigbaren Schliessventil (2), wobei beide Ventile (1,2) einen gemeinsamen Ventilkörper (3) aufweisen, der zwei im Abstand zueinander angeordnete Öffnungen (4,5) zur Aufnahme jeweils einer Schliessvorrichtung (6,7) besitzt, **dadurch gekennzeichnet, dass** in die Öffnung (5) des Schliessventils (2) ein Gehäuseteil (9) eingesetzt und mittels einer Renkverbindung (20,21) lösbar am gemeinsamen Ventilkörper (3) befestigt ist, dass dieser Gehäuseteil (9) als Träger für Betätigungsmittel (11,45) ausgebildet ist und einen ringförmigen Ansatz (40) aufweist, an dem aussenseitig mehrere Befestigungsnocken (13) angeformt sind und der Rastmittel (17) zur lösbaren Befestigung einer Ventilmembran (11) an diesem Ansatz (40) aufweist.

2. Ventilanordnung nach Anspruch 1, **dadurch gekennzeichnet, dass** der Gehäuseteil (9) des Schliessventils (2) Träger eines Pilotventils (45) für das Schliessventil (2) ist und dieses Pilotventil (45) auf dem Gehäuseteil (9) aufgesetzt, vorzugsweise aufgeschoben ist.

3. Ventilanordnung nach Anspruch 1 oder 2, **dadurch gekennzeichnet, dass** die Befestigungsnocken (13) Rastnasen (13a) aufweisen, die mit Rastmitteln (19) des Ventilkörpers (3) zur Drehsicherung des Gehäuseteils (9) zusammenarbeiten.

4. Ventilanordnung nach einem der Ansprüche 1 bis 3, **dadurch gekennzeichnet, dass** die Ventilmembran (11) hutförmig ausgebildet ist und einen nach aussen ragenden Rand (22) aufweist, der zwischen dem Ventilkörper (3) und dem eingesetzten Gehäuseteil(9) festgeklemmt ist.

5. Ventilanordnung nach Anspruch 1, **dadurch gekennzeichnet, dass** ein Gehäuseteil (8) für das Absperr- und Regulierventil (1) Rastmittel (8a) zur lösbaren Befestigung eines Siebes (10) an diesem Gehäuseteil (8) aufweist und ebenfalls mittels einer Renkverbindung am Ventilkörper (3) befestigt ist.

6. Ventilanordnung nach Anspruch 1 oder 5, **dadurch gekennzeichnet, dass** der Gehäuseteil (8) für das Absperr- und Regulierventil (1) eine Regulierschraube (23) konzentrisch umgibt.

7. Ventilanordnung nach Anspruch 6, **dadurch gekennzeichnet, dass** der Gehäuseteil (8) für das Absperr- und Regulierventil (1) gegenüber dem Ventilkörper (3) und gegenüber der Regulierschraube (23) jeweils verdrehbar abgedichtet ist.

8. Ventilanordnung nach einem der Ansprüche 1 bis 7, **dadurch gekennzeichnet, dass** das Sieb (10) als auch die Ventilmembran (11) auswechselbar sind.

## Claims

1. Valve arrangement for a flushing device, in particular a urinal, having a shut-off and regulating valve (1) and a closing valve (2) which is connected downstream of said shut-off and regulating valve (1) and can be actuated pneumatically or electromagnetically, both valves (1, 2) having a common valve body (3) which has two openings (4, 5) arranged at a distance from one another for accommodating one closing device (6, 7) each, **characterized in that** a housing part (9) is inserted into the opening (5) of the closing valve (2) and is releasably fastened to the common valve body (3) by means of a bayonet connection (20, 21), **in that** this housing part (9) is designed as a support for actuating means (11, 45) and has an annular extension (40), on which a plurality of fastening lugs (13) are integrally formed on the outside and which has latching means (17) for releasably fastening a valve diaphragm (11) to this extension (40).

2. Valve arrangement according to Claim 1, **characterized in that** the housing part (9) of the closing valve (2) is a support of a pilot valve (45) for the closing valve (2) and this pilot valve (45) is mounted, preferably pushed into position, on the housing part (9).

3. Valve arrangement according to Claim 1 or 2, **characterized in that** the actuating lugs (13) have latching noses (13a) which interact with latching means (19) of the valve body (3) for locking of the housing part (9) against rotation.

4. Valve arrangement according to one of Claims 1 to 3, **characterized in that** the valve diaphragm (11) is of hat-shaped design and has an outwardly projecting margin (22) which is clamped in place between the valve body (3) and the inserted housing part (9).

5. Valve arrangement according to Claim 1, **characterized in that** a housing part (8) for the shut-off and regulating valve (1) has latching means (8a) for releasably fastening a screen (10) to this housing part (8) and is likewise fastened to the valve body (3) by means of a bayonet connection.

6. Valve arrangement according to Claim 1 or 5, **characterized in that** the housing part (8) for the shut-off and regulating valve (1) concentrically surrounds a regulating screw (23).

7. Valve arrangement according to Claim 6, **characterized in that** the housing part (8) for the shut-off and regulating valve (1) is in each case sealed off in a rotatable manner relative to the valve body (3) and relative to the regulating screw (23).

8. Valve arrangement according to one of Claims 1 to 7, **characterized in that** the screen (10) and the valve diaphragm (11) are interchangeable.

## Revendications

1. Agencement de vanne pour un dispositif de chasse, en particulier un urinoir, avec une vanne d'arrêt et de réglage (1) et une vanne de fermeture (2) à commande pneumatique ou électromagnétique, installée après celle-ci, dans lequel les deux vannes (1, 2) présentent un corps de vanne commun (3), qui comporte deux ouvertures. (4, 5) disposées à distance l'une de l'autre destinées à recevoir chacune un dispositif de fermeture (6, 7), **caractérisé en ce qu'**une pièce de boîtier (9) est introduite dans l'ouverture (5) de la vanne de fermeture (2) et est fixée de façon détachable au corps de vanne commun (3) au moyen d'un assemblage à baïonnette (20, 21), **en ce que** cette pièce de boîtier (9) est configurée en support pour des moyens de commande (11, 45) et présente une couronne annulaire (40), sur laquelle plusieurs ergots de fixation (13) sont façonnés extérieurement et qui présente des moyens d'accrochage (17) pour la fixation détachable d'une membrane de vanne (11) sur cette couronne (40).

2. Agencement de vanne suivant la revendication 1, **caractérisé en ce que** la pièce de boîtier (9) de la vanne de fermeture (2) est un support d'une vanne pilote (45) pour la vanne de fermeture (2) et cette vanne pilote (45) est posée, de préférence glissée sur la pièce de boîtier (9).

3. Agencement de vanne suivant la revendication 1 ou 2, **caractérisé en ce que** les ergots de fixation (13) présentent des becs d'accrochage (13a), qui coopèrent avec des moyens d'accrochage (19) du corps de vanne (3) pour empêcher la rotation de la pièce de boîtier (9).

4. Agencement de vanne suivant l'une quelconque des revendications 1 à 3, **caractérisé en ce que** la membrane de vanne (11) a la forme d'un chapeau et présente un bord (22) saillant vers l'extérieur, qui est calé entre le corps de vanne (3) et la pièce de boîtier engagée (9).

5. Agencement de vanne suivant la revendication 1, **caractérisé en ce qu'**une pièce de boîtier (8) pour la vanne d'arrêt et de réglage (1) présente des moyens d'accrochage (8a) pour la fixation détachable d'un tamis (10) sur cette pièce de boîtier (8) et est également fixée au corps de vanne (3) au moyen d'un assemblage à baïonnette.

6. Agencement de vanne suivant la revendication 1 ou 5, **caractérisé en ce que** la pièce de boîtier (8) pour la vanne d'arrêt et de réglage (1) entoure de façon concentrique une vis de réglage (23).

7. Agencement de vanne suivant la revendication 6, **caractérisé en ce que** la pièce de boîtier (8) pour la vanne d'arrêt et de réglage (1) est rendue étanche en rotation par rapport au corps de vanne (3) et par rapport à la vis de réglage (23).

8. Agencement de vanne suivant l'une quelconque des revendications 1 à 7, **caractérisé en ce que** le tamis (10) ainsi que la membrane de vanne (11) sont remplaçables.
